# EUROPEAN PATENT APPLICATION

(11) **EP 1 057 415 A1**
(43) Date of publication of application: **06.12.2000**
(21) Application number: 00201615.2
(22) Date of filing: 03.05.2000
(51) Int. Cl.: A23L 1/16

(54) **Lipase-treated pasta and manufacturing process**

(30) Priority: 04.06.1999 EP 99201763
(71) Applicant: SOCIETE DES PRODUITS NESTLE S.A., 1800 Vevey (CH)
(72) Inventor: Halden, Jonas Peter, 8472 Seuzach (CH); Realini, Annabella, 1095 Lutry (CH); Juilleart, Marcel Alexandre, 1000 Lausanne (CH); Hansen, Carl Erik, 1066 Epalinges (CH)
(74) Representative: Wavre, Claude-Alain

(57) **Abstract**

Pasta which may be manufactured by a process consisting of preparing a mixture comprising a cereal flour or semolina, added water and lipase, kneading the mixture into a dough, and forming the dough into a pasta shape, and in which the residual lipase activity is lower than 100 LU/kg pasta.

## Description

The present invention relates to pasta which may be manufactured by a process consisting of preparing a mixture comprising a cereal flour or semolina, added water and lipase, kneading the mixture into a dough, and forming the dough into a pasta shape.

US3520702 (Robert MENZI) discloses a method of making dried pasta from semolina and water which comprises adding to either the semolina or the water a small amount of enzymatic substance such as pancreatin, glucose-oxidase, catalase, proteinase, amylase or wheat germ lipase, preparing a paste from semolina and water, kneading, extruding and drying, the pasta thus obtained being highly resistant to cooking so that, once cooked, it has a very good elasticity and it is not sticky.

JP9070269 (NISSHIN FLOUR MILLING Co.) discloses a process for manufacturing noodles which comprises adding water, salt, oil and lipase to wheat flour or other cereal grain flour, kneading to form a dough, allowing the dough to rest at room temperature to mature it, and using the dough for making noodles in fresh, semi-dried or dried form.

A first object of the present invention is to provide a pasta, which may be manufactured by a process consisting of preparing a mixture comprising a cereal flour or semolina, added water and lipase, kneading the mixture into a dough and forming the dough into a pasta shape, in which practically no lipase activity is left.

A second object of the present invention is to provide a pasta, which may be manufactured by a process consisting of preparing a mixture comprising a cereal flour or semolina, added water and lipase, kneading the mixture into a dough and forming the dough into a pasta shape, which has a long shelf life, namely in which practically no rancidity may be noticed after one to two years storage at 15 to 30°C in a traditional celophane package, for example.

A third object of the present invention is to provide a pasta, which may be manufactured by a process consisting of preparing a mixture comprising a cereal flour or semolina, added water and lipase, kneading the mixture into a dough and forming the dough into a pasta shape, in which an original yellow colour is preserved.

To this end, the present pasta may be manufactured by a process consisting of preparing a mixture comprising a cereal flour or semolina, added water and lipase, kneading the mixture into a dough, and forming the dough into a pasta shape, and the lipase activity left in the pasta is lower than 100 LU/kg pasta, preferably lower than 50 LU/kg.

Similarly the present process for manufacturing pasta consists of preparing a mixture comprising a cereal flour or semolina, added water and lipase, kneading the mixture into a dough, and forming the dough into a pasta shape, wherein the lipase activity is reduced to a residual value lower than 100 LU/kg pasta, preferably lower than 50 LU/kg pasta by a heat treatment.

It has surprisingly been found that it is possible in this way both to obtain the known advantages of pasta made by a process aided by the use of lipase, namely pasta which have an improved texture, especially an improved firmness and which are not sticky, and to avoid practically any remaining activity of lipase in the finished product so that practically no rancidity may be noticed after one to two years storage.

Throughout the present description and claims the expression "lipase activity left in the pasta" means "lipase activity within the pasta as measured immediately after its manufacture".

To implement the present process for manufacturing pasta, a mixture of cereal flour or semolina, added water and lipase may be prepared which has a water content of from 25 to 40%, for example.

The cereal flour or semolina may be Durum or hard wheat semolina the quality of which may but need not be premium, or even soft wheat flour, for example.

The mixture may comprise lipase in an amount of from 500 to 50'000 Lipase Units (LU) per kg of cereal flour or semolina, for example.

The lipase may be any food grade lipase available on the market such as the enzyme sold under the name Lipopan 50 BG by the Danish company NOVO NORDISK or the enzyme sold under the name GRINDAMYL EXEL 16 by the Danish company DANISCO, for example.

The mixture may further comprise additives such as egg material, sodium chloride, spices, antioxidants and/or emulsifiers, for example.

Egg material in the form of whole egg powder, egg white powder or liquid whole egg may be added to the mixture in order to further increase the firmness of the pasta, a main contribution to such an increase being indeed already obtained by using lipase, for example.

The mixture may be prepared in form of a premix of dry or powdery ingredients to which water is added, for example.

Lipase may be incorporated into the premix or into the added water, for example.

In this regard, it has surprisingly been found that an effective preservation of the colour may be obtained if C02 in gaseous form is injected into the mixture during kneading, for example.

The mixture may be prepared, kneaded and formed in any known pasta making way, especially by means of an equipment comprising a paddle mixer, a twin screw kneader and a single screw extruder, or a twin screw mixer-kneader and a single screw extruder, or a twin screw mixer-kneader-extruder, or a twin screw mixer-kneader assisted by a gear pump for the extrusion, for example.

Care may be taken to ensure that the temperature of the mixture during mixing and/or kneading and extrusion remains below 55°C.

An extruded pasta may be cut into long pasta goods such as long spaghetti, or into short pasta goods such as short spaghetti, linguine, eliche or maccaroni, for example.

In a first preferred embodiment of the present process where the pasta is dried after extrusion, inactivation by a heat treatment may be carried out during drying at a temperature of from 84 to 95°C for 200 to 700 min, for example.

It has surprisingly been found that such a heat treatment permits a lipase inactivation to be obtained such that the pasta has a residual lipase activity lower than 100 LU/kg pasta, or even lower than 50 LU/kg pasta.

In a second preferred embodiment of the present invention where the pasta is not dried, only semi-dried or dried at a later stage, inactivation by a heat treatment may be carried out by blanching and/or cooking after extrusion, for example.

In this second preferred embodiment, the extruded pasta may be hot air treated to fix the shape before blanching and to get a product firmer in bite, for example.

The extruded pasta may be blanched by steaming or by steaming and hot water-spraying, for example, the purpose of water-spraying during steaming being to minimise starch losses during blanching, for example.

The blanching step may be carried out at 85-100°C for 1 to 10 min, while steaming with steam at 98-100°C and spraying water at 85-98°C, for example. The water used for spraying may be acidified water having a pH of from 5.0 to 5.8, for example.

During blanching the water uptake may be such that the blanched pasta has a total water content of from 60 to 75%, for example.

The blanching step may then be stopped by water cooling, for example.

Preferably, the blanching step is followed by drying in order to obtain instant or quick cooking pasta. This drying after blanching may comprise a pre-drying step and a final drying step.

A pre-drying step intended for reducing the water content of the blanched pasta down to 8 to 13% may be carried out at from 85 to 95°C for 15 to 25 min, for example. A final drying step intended to stabilise the pasta to an end water content of from 4 to 7% may be carried out at from 75 to 98°C for 40 to 80 min, for example.

It has been found that it is possible in this way to prepare, with relatively low cooking loss, pasta which are not sticky after blanching and which rehydrate instantly or which cook quickly while having a nice colour and a firm texture (good bite). Moreover it has been found that, for achieving this features, a realtively high reduction of egg and a realtively high replacement of semolina with soft wheat flour is allowed as compared with similar pasta made without using lipase in a similar manufacturing process.

In the present process, especially in both the first and second preferred embodiments, adequate temperatures and times for lipase to develop its beneficial effect on flour or semolina and/or on the dough may be encountered during the per se traditional steps of preparing a premix and/or the mixture, kneading the mixture and forming it into a pasta shape, for example.

However, if needed, an additional maturing step may be provided for before or after kneading the mixture into a dough, at a temperature of from 20 to 54°C for from 30 to 180 min, or even before making the mixture, by simply adding the lipase to the semolina or flour and allowing to rest at 15 to 30°C for 3 hours to 20 days, for example.

The pasta and the process according to the present invention are illustrated in the following Examples in which the percentages and parts are by weight and the lipase activity is expressed and was measured according to the method disclosed hereafter.

**Lipase in pasta - radioisotope assay with** ^{**14**}**C-labelled triolein-substrate**

The use of radiolabelled triacylglycerol (TAG) substrate permits specific and sensitive determination of TAG-lipase activity. The radiolabelled lipid products, produced during hydrolysis, can be separated by TLC and quantified by radioscanning.

### Lipid standards for TLC:

The lipids were purchased from Avanti Polar Lipids Inc. (700 Industrial Park Drive, Alabaster, AL 35007, USA), and 5 µg of each neutral lipid (triolein, diolein, monoolein and oleic acid) were applied as TLC-standards. The neutral lipids were prepared as 0.2 mg/ml standard solution in hexane.

### Substrate:

The assay is carried out with labelled triolein-substrate added to the cold triolein. The radiolabelled substrate is triolein (carboxyl-¹⁴C), (NEC-674, NEN Research Products, DuPont, Wilmington, DE, USA). The cold substrate is triolein (99% pure) from Sigma (T-7140).

### Emulsion (final 50 mM triolein):

1 µl ¹⁴C-triolein (0.1 mCi/ml) per assay
Evaporate to dryness with N₂
Cold triolein (final 50 mM)
100 mM Bis-Tris-Cl, pH 7.0, 5% gum arabic

The emulsion is prepared with a Braun Labsonic U sonifier (Braun Diessel Biotech GmbH, Melsungen, Germany) for 60 sec at 50 Hz.

### Enzyme extract:

Spaghetti (10 g) is ground to fine powder in an IKA Universal Laboratory Mill with cooling. The powder (2 g) is homogenized in 20 ml of water using Polytron, followed by centrifugation at 5.000 g for 5 min. The supernatant is used for determination of enzyme activity. Alternatively, activity can be analysed in crude suspension.

### Assay:

The assay is started by addition of 80 µl freshly prepared emulsion to 20 µl enzyme extract. The incubation is carried out for 15-1440 min at 30 °C. If the reaction is performed longer than 3 h, 0.01 % NaN₃ is added.
The reaction is stopped by rapid mixing with 200 µl chloroform:methanol (1:1) followed by centrifugation for phase separation. Lipase activity is determined by analysing the organic phase for radiolabelled free fatty acids (FFA). The neutral lipids (triacylglycerol, diacylglycerol, monoacylglycerol and free fatty acids) are separated on HPTLC precoated Silica gel 60 plates (100 x 200 mm) with toluene:hexane:HCO₂H (70:30:0.5), airdried, followed by a second elution with hexane:Et₂O:HCO₂H (60:40:1). The plates are airdried, and the lipids stained by dipping in 1.56% CuSO₄ in 1.2 M H₃PO₄ followed by charring at 180 °C for approximately 1 min. Lipids are identified by comparing the HPTLC retention coefficients of known standards with the radioactivity in each spot and quantified with a Berthold LB 235 Tracemaster, automatic radioactivity TLC analyser (Lab. Berthold, Wildbad, West Germany). Lipase activity is expressed as units/g fr w (µmol FFA released/min/g fr w), or, if multiplied by 1000, as LU/kg.
The lowest activity which can be detected by this method is 50 LU/kg.

### Example 1

Pasta in form of dried spaghetti was manufactured in a traditional Bühler pasta manufacturing equipment, from a mixture having a water content of 32% and comprising 76% Durum semolina into which lipase (Lipopan 50 BG) was mixed at a rate of 5'000 LU/kg, and 24% soft water.

Lipase was first pre-mixed with semolina during 20 min before being fed to a dosing unit of the Bühler line.

Water and semolina were then continuously dosed into a premixing screw, mixed for about 20 min in a mixer and subsequently fed into a vacuum screw prior to extrusion.

The dough had a temperature of about 30-35°C when it entered a final extruder screw. Kneading and shearing induced by the extruder screw increased the temperature to about 45-50°C and the pressure to about 120-140 bar in front of an extrusion die having circular openings 1.85 mm in diameter.

The extruded spaghetti were hanged up on hooks, cut in proper lengths and finally fed to drying chambers.

During the drying cycle the temperature was raised to 88°C in 50 min, maintained betweeen 88 and 95°C for 97 min, maintained between 84 and 86°C for 145 min and cooled to 30°C in 14 min.

The spaghetti had a residual lipase activity lower than 50 LU/kg. They were then packed and stored at 25°C.

For comparison, traditional spaghetti were manufactured in a similar way, except that no lipase was used.

Firmness measurements, stickiness measurements and panel sensory tests were carried out on both the pasta according to the Example and the traditional one.

The pasta of the invention was found to be significantly firmer and less sticky than the traditional one.

These properties were kept for a storage of one year at 25°C after which the pasta of the invention was found not to be rancid at all.

### Example 2

Pasta in form of instant maccaroni was manufactured in an equipment comprising a traditional Bühler pasta manufacturing equipment, a steam/water blancher and an air dryer, from a mixture having a water content of 27.2% and comprising Durum semolina, powdered whole dry egg (5% calculated on semolina), emulsifier (1% Dimodan from Danisko, calculated on semolina), lipase (25'000 LU Lipopan 50 BG per kg of semolina) and added soft water.

Lipase was first pre-mixed with 10% of the semolina and left to stand for 6.5 hours before being mixed with egg, water and a solution of Dimodan.

The mixture was kneaded and extruded under conditions similar to the conditions illustrated in Example 1 while using an extrusion die having adequate openings fro obtaining maccaroni.

The extruded maccaroni were blanched in the steam/water blancher at about 90°C for 6 min while steaming with steam at about 99°C and spraying acidified water (pH 5.5) at about 85°C.

The maccaroni had a water content of 62.3% after blanching.

The blanched maccaroni were then predried at 85 to 91°C for 28 min down to a water content of 11 to 13%.

The predried maccaroni were finally dried at 78°C for 90 min down to a residual water content of 6%, and chilled.

The instant maccaroni thus obtained had a residual lipase activity lower than 50 LU/kg. They were then packed and stored at 25°C.

After reconstitution by simply pouring hot water over them, the maccaroni had a nice yellow colour, a good bite and they were not sticky.

These properties were kept for a storage of one year at 25°C after which the pasta of the invention was found not to be rancid at all.

### Example 3

Pasta in form of instant maccaroni was manufactured in an equipment comprising a traditional Bühler pasta manufacturing equipment, a steam/water blancher and an air dryer, from a mixture having a water content of 29.0% and comprising equal amounts of Durum semolina and soft wheat flour, powdered whole dry egg (10% calculated on semolina plus soft wheat flour), emulsifier (1% Dimodan from Danisko, calculated on semolina plus soft wheat flour), lipase (25'000 LU Lipopan 50 BG per kg of semolina plus soft wheat flour) and added soft water.

Lipase was first pre-mixed with 10% of the semolina plus soft wheat flour and left to stand for 7 days before being mixed with egg, water and a solution of Dimodan.

The mixture was kneaded and extruded under conditions similar to the conditions illustrated in Example 1 while using an extrusion die having adequate openings fro obtaining maccaroni.

The extruded maccaroni were blanched in the steam/water blancher at about 90°C for 6 min while steaming steam at about 99°C and spraying acidified water (pH 5.5) at 85°C.

The maccaroni had a water content of 63.4% after blanching.

The blanched maccaroni were then predried at 85 to 91°C for 28 min down to a water content of 11 to 13%.

The predried maccaroni were finally dried at 78°C for 90 min down to a residual water content of 6%, and chilled.

The instant maccaroni thus obtained had a residual lipase activity lower than 50 LU/kg. They were then packed and stored at 25°C.

After reconstitution by simply pouring hot water over them, the maccaroni had a nice whiter colour, a good bite and they were not sticky.

These properties were kept for a storage of one year at 25°C after which the pasta of the invention was found not to be rancid at all.

### Example 4

Instant maccaroni were prepared in the way illustrated in Example 2 except the fact that Lipase was first pre-mixed with 10% of the added water, then mixed with the remaining part of added water and then directly mixed with egg, a solution of Dimodan and the semolina.

The instant maccaroni thus obtained had qualities very similar to those of the maccaroni obtained according to Example 2.

## Claims

1. Pasta which may be manufactured by a process consisting of preparing a mixture comprising a cereal flour or semolina, added water and lipase, kneading the mixture into a dough, and forming the dough into a pasta shape, and in which the residual lipase activity is lower than 100 LU/kg pasta.

2. A process for manufacturing pasta which consists of preparing a mixture comprising a cereal flour or semolina, added water and lipase, kneading the mixture into a dough, and forming the dough into a pasta shape, wherein the lipase activity is reduced to a residual value lower than 100 LU/kg pasta by a heat treatment.

3. A process according to claim 2, in which the pasta is dried after extrusion, wherein inactivation by a heat treatment is carried out during drying at a temperature of from 84 to 95°C for 200 to 700 min.

4. A process according to claim 2, in which the pasta is semi-dried or not dried after extrusion, wherein inactivation by a heat treatment is carried out by blanching and/or cooking after extrusion.

5. A process according to claim 4, wherein inactivation is carrier out by blanching at 85-100°C for 1 to 10 min, while steaming with steam at 98-100°C and spraying water at 85-98°C.

6. A process according to claim 2, in which CO2 in gaseous form is injected into the mixture before kneading.
